# DEMANDE DE BREVET EUROPEEN

(11) **EP 1 188 903 A1**
(43) Date de publication de la demande: **20.03.2002**
(21) Numéro de dépôt: 01402378.2
(22) Date de dépôt: 17.09.2001
(51) Int. Cl.: F01D 17/16, F04D 29/56

(54) **Veine d'écoulement usinée pour turbomachine**

(30) Priorité: 18.09.2000 FR 0011856
(71) Demandeur: Snecma Moteurs, 75015 Paris (FR)
(72) Inventeur: Caubet, Jean-Pierre, 77190 Dammarie Les Lys (FR); Dao, Daniel, 77176 Savigny Le Temple (FR); Jean, Antoine, 77000 Melun (FR); Merville, Didier, 91650 Breuillet (FR)
(74) Mandataire: David, Alain

(57) **Abrégé**

Dans un stator de compresseur de turbomachine comportant une pluralité d'aubes à calage variable (36) montée en rotation, autour d'un axe de pivotement (38), dans une paroi (34) formant une surface de révolution autour d'un axe de rotation central longitudinal de la turbomachine (32), chaque aube étant inclinée d'un angle déterminé (α) par rapport à un plan perpendiculaire de cet axe central longitudinal, il est prévu que cette paroi soit usinée localement en regard d'une partie d'extrémité de l'aube (42) pour former une portion ou poche sphérique (40) dont le centre est positionné sur l'axe de pivotement et le rayon est déterminé pour assurer, sur toute la plage de fonctionnement de l'aube, un jeu minimal prédéterminé entre cette partie d'extrémité de l'aube et la partie usinée en regard de la paroi tout en limitant la profondeur de cette poche.

## Description

### Domaine de l'invention

La présente invention se rapporte au domaine spécifique des turbomachines et elle concerne plus particulièrement un aménagement de la veine d'écoulement aérodynamique d'un stator de compresseur de ces turbomachines.

### Art antérieur

Dans un turboréacteur ou un turbopropulseur (appelé dans la suite de la description turbomachine), il est connu que l'emploi de profils aérodynamiques à calage variable améliore le rendement général du moteur. Il en est ainsi des aubes à calage variable du compresseur. Toutefois, on sait également que le jeu existant entre les extrémités de ces aubes et les parois de la veine d'écoulement a une influence néfaste sur ce rendement, un jeu élevé étant une source importante de pertes. Or, avec des aubes à calage variable, les pertes augmentent en proportion de la rotation de ces aubes. La demande de brevet française n° 2 443 577 s'est intéressée à ce problème et pour sa résolution a proposé un aménagement spécifique de la veine intérieure d'écoulement aérodynamique. Malheureusement cet aménagement souffre de deux inconvénients majeurs. Tout d'abord, il oblige à une inclinaison de l'axe de pivotement du pivot de l'aube au niveau de la veine extérieure, et ensuite, l'usinage de la veine intérieure sur toute une circonférence, en gênant l'écoulement entre les aubes (par la création de turbulences), introduit des pertes de rendement inutiles.

### Objet et définition de l'invention

La présente invention a pour objet un stator de compresseur de turbomachine dont l'aménagement de la veine d'écoulement permet d'obtenir une amélioration notable du rendement comme de la marge au pompage (limite de décollement de l'écoulement) par rapport aux dispositifs de l'art antérieur. Un but de l'invention est aussi de proposer un stator de compresseur permettant une optimisation de ce rendement sur toute la plage de fonctionnement des aubes, de leur position angulaire d'ouverture à leur position angulaire de fermeture.

Ces buts sont atteints par un stator de compresseur de turbomachine comportant une pluralité d'aubes à calage variable, chaque aube montée en rotation, autour d'un axe de pivotement, dans une paroi formant une surface de révolution autour d'un axe de rotation central longitudinal de la turbomachine, étant inclinée d'un angle déterminé α par rapport à un plan perpendiculaire audit axe central longitudinal, caractérisé en ce que ladite paroi est usinée localement en regard d'une partie d'extrémité de chacune des aubes pour former une pluralité de portions ou poches sphériques dont les centres respectifs sont positionnés sur lesdits axes de pivotement et les rayons sont déterminés pour assurer, sur toute la plage de fonctionnement des aubes, un jeu minimal prédéterminé entre ladite partie d'extrémité de l'aube et ladite portion sphérique de paroi usinée en regard tout en limitant la profondeur d'usinage de cette portion sphérique.

Ladite partie d'extrémité de l'aube est usinée avec une forme complémentaire de celle de ladite poche sphérique de façon à assurer un jeu constant entre ladite paroi et ladite partie d'extrémité de l'aube.

Avec cette structure particulière comportant une pluralité de poches sphériques, un jeu constant et minimal peut être aisément obtenu sur toute la plage de fonctionnement des aubes.

Selon un mode préférentiel de réalisation, ladite paroi est la paroi extérieure, ou carter, du stator de compresseur, ladite partie d'extrémité d'aube étant l'extrémité supérieure de cette aube. De préférence, ladite partie d'extrémité supérieure est une partie de l'aube en porte à faux arrière, dite aussi talon, en liaison avec un bord de fuite de cette aube.

Avantageusement, le stator de compresseur comporte en outre une partie non usinée entre deux poches sphériques adjacentes.

L'invention concerne également tout compresseur d'une turbomachine comportant un stator de compresseur tel que décrit précédemment.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue en coupe axiale d'une partie supérieure d'aube en liaison avec la partie extérieure correspondante de la veine d'écoulement d'un compresseur de turbomachine selon l'invention,
- la figure 2 est une vue suivant A de la figure 1 pour différentes positions angulaires d'une aube,
- la figure 3 est une vue en coupe d'une partie de stator de compresseur de turbomachine selon l'invention,
- la figure 4 est une vue en coupe axiale d'une partie supérieure d'aube en liaison avec la partie extérieure correspondante de la veine d'écoulement d'un compresseur de turbomachine selon l'art antérieur, et
- la figure 5 est une vue suivant B de la figure 4 pour différentes positions angulaires d'une aube.

### Description détaillée d'un mode de réalisation préférentiel

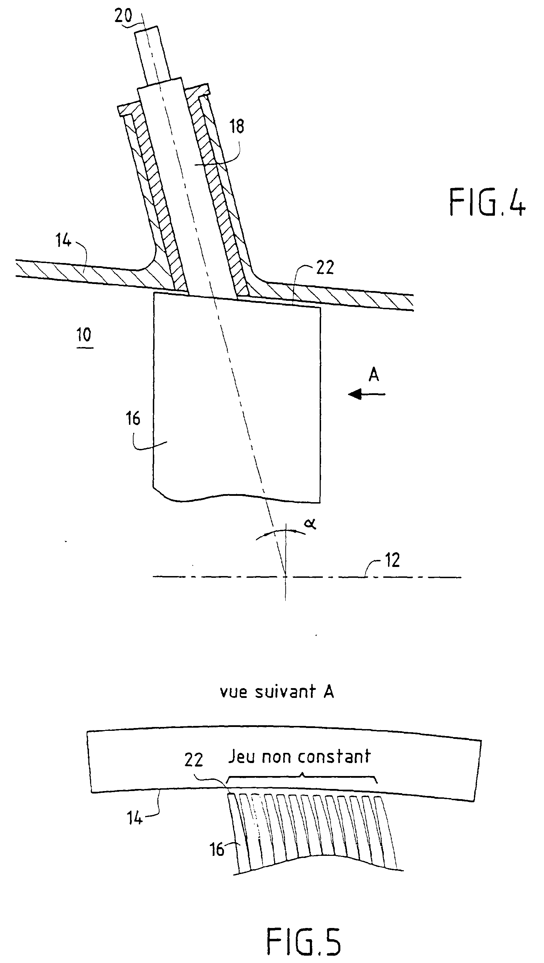

La figure 4 est une vue en coupe d'une partie d'une veine annulaire d'écoulement 10 disposée autour d'un axe central longitudinal 12 d'une turbomachine de l'art antérieur et délimitée à sa partie extérieure par une paroi 14 formant une surface de révolution autour de cet axe longitudinal. Dans cette veine annulaire d'écoulement se trouve une aube aérodynamique à calage variable 16. Cette aube peut tourner autour d'un axe de pivotement par l'intermédiaire de son pivot supérieur 18 (commandé en rotation par un mécanisme non représenté), entre une position de fermeture et une position d'ouverture, autour d'un axe de rotation 20 orienté radialement et incliné d'un angle déterminé α par rapport à un plan perpendiculaire à l'axe central longitudinal 12. Typiquement, la veine annulaire 10 présente une configuration conique avec une réduction de section vers l'aval par rapport au sens de l'écoulement et, l'aube illustrée peut, par exemple, être l'une quelconque des aubes d'une rangée d'aubes (appelée aussi redresseur) d'un stator de compresseur de la turbomachine.

Comme l'illustre la figure 5, qui est une vue suivant A de la figure 4 et qui montre différentes positions angulaires d'une aube 16 entre sa position de fermeture (à gauche sur la figure) et sa position d'ouverture (à droite sur la figure), le jeu existant entre l'extrémité supérieure 22 de l'aube et la paroi extérieure 14 de la veine lui faisant face n'est pas constant et varie lors du pivotement de cette aube, le jeu minimal correspondant en général aux deux positions précitées de fermeture et d'ouverture. Entre ces deux positions angulaires extrêmes, le jeu n'est pas optimisé et les pertes de rendement sont alors particulièrement importantes.

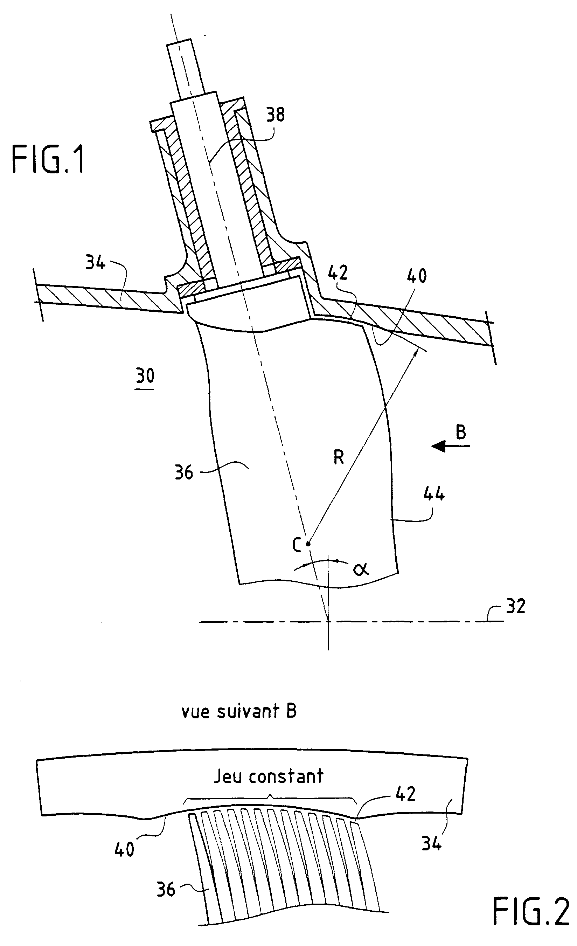

La figure 1 est une vue en coupe longitudinale d'une partie d'une veine annulaire d'écoulement 30 aménagée de façon à garantir un jeu constant et minimal sur toute la plage de fonctionnement de l'aube d'un stator de compresseur de turbomachine selon l'invention. Comme précédemment, cette veine d'axe longitudinal 32 est délimitée à sa partie extérieure par une paroi 34, appelée aussi carter, dans laquelle une aube 36 est montée en rotation, autour d'un axe de pivotement traversant son pivot supérieur 38.

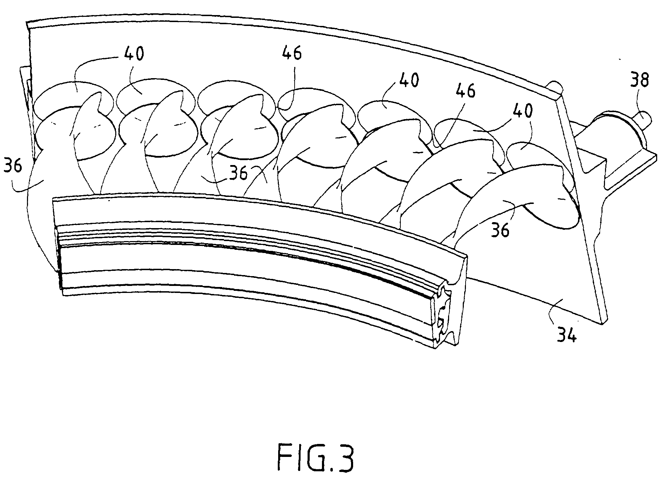

Selon l'invention, une partie interne de la paroi extérieure 34 en regard d'une extrémité supérieure de chaque aube 42 est usinée localement (sur toute la course de cette aube) pour former une portion ou poche sphérique 40 dont le centre est positionné sur l'axe de pivotement 38 de l'aube de la turbomachine, et dont le rayon est déterminé pour d'une part limiter la profondeur de cette poche (obtention d'une hauteur d'usinage la plus faible possible) et d'autre part assurer, sur toute la plage de fonctionnement opérationnel de l'aube, un jeu minimal entre la partie supérieure de cette aube et la partie en regard de la paroi. Ce jeu minimal est déterminé pour ne pas créer d'interférences dans les positions respectives d'ouverture et de fermeture des aubes. Cet usinage localisé, qui laisse une partie 46 non usinée entre deux poches sphériques adjacentes 40 (voir la figure 3 qui illustre une portion de redresseur assemblée d'étage de compresseur), est bien entendu réalisé pour chacune des aubes et pour chaque rangée d'aubes du stator de compresseur.

La partie supérieure d'extrémité de l'aube 42 est quant à elle usinée avec une forme complémentaire à celle de la poche sphérique 40, assurant ainsi le jeu constant entre cette partie supérieure de l'aube et la paroi extérieure 34, comme l'illustre la figure 2 qui est une vue suivant B de la figure 1. Dans un mode particulier de réalisation, cette partie supérieure d'extrémité 42 correspond à une partie de l'aube en porte à faux arrière (ou talon) qui rejoint son bord de fuite 44.

Le tableau comparatif ci-dessous résume très simplement l'amélioration obtenue avec l'invention par rapport à l'art antérieur, sur le jeu de fonctionnement d'une aube inclinée d'environ 12°, pour des positions angulaires comprises entre -10° et 30°.

| | | | | | | | |
|---|---|---|---|---|---|---|---|
| Position | -10° | 0° | 10° | 11° | 13° | 20° | 30° |
| Jeu paroi/aube (art antérieur) | 0 | 0.36 | 0.90 | 0.96 | 1.10 | 1.64 | 2.56 |
| Jeu paroi/aube (invention) | 0 | 0 | 0 | 0 | 0.25 | 1.27 | 2.83 |

On peut ainsi, avec l'invention, observer une réduction du jeu de près d'1 mm entre la paroi de la veine extérieure et la partie supérieure de l'aube, sur toute la plage de fonctionnement opérationnel de l'aube (entre -10° et 11°), la zone angulaire comprise entre 13° et 30° correspondant à une phase de démarrage non optimisée. L'amélioration obtenue est dès lors particulièrement importante et procure une augmentation notable du rendement de l'aube dans sa plage de fonctionnement.

## Revendications

1. Stator de compresseur de turbomachine comportant une pluralité d'aubes à calage variable (36), chaque aube montée en rotation, autour d'un axe de pivotement (38), dans une paroi (34) formant une surface de révolution autour d'un axe de rotation central longitudinal (32) de la turbomachine, étant inclinée d'un angle déterminé (α) par rapport à un plan perpendiculaire audit axe central longitudinal, **caractérisé en ce que** ladite paroi est usinée localement en regard d'une partie d'extrémité (42) de chacune des aubes pour former une pluralité de portions ou poches sphériques (40) dont les centres respectifs sont positionnés sur lesdits axes de pivotement des aubes et les rayons sont déterminés pour assurer, sur toute la plage de fonctionnement des aubes, un jeu minimal prédéterminé entre ladite partie d'extrémité de chaque aube et ladite portion sphérique de paroi usinée en regard tout en limitant la profondeur d'usinage de cette portion sphérique.

2. Stator de compresseur selon la revendication 1, **caractérisé en ce que** ladite partie d'extrémité de l'aube est usinée avec une forme complémentaire de celle de ladite poche sphérique de façon à assurer un jeu constant entre ladite paroi et ladite partie d'extrémité de l'aube.

3. Stator de compresseur selon la revendication 2, **caractérisé en ce que** ladite paroi est la paroi extérieure, ou carter, du stator de compresseur, ladite partie d'extrémité d'aube étant l'extrémité supérieure de cette aube.

4. Stator de compresseur selon la revendication 3, **caractérisé en ce que** ladite partie d'extrémité supérieure est une partie de l'aube en porte à faux arrière, dite aussi talon, en liaison avec un bord de fuite (44) de cette aube.

5. Stator de compresseur selon la revendication 1, **caractérisé en ce qu'**il comporte en outre une partie (46) non usinée entre deux poches sphériques adjacentes.

6. Compresseur de turbomachine comportant un stator de compresseur selon l'une quelconque de revendications 1 à 5.
